# EUROPEAN PATENT SPECIFICATION

(11) **EP 3 903 007 B1**
(45) Date of publication and mention of the grant of the patent: **07.08.2024**
(21) Application number: 19809927.7
(22) Date of filing: 26.11.2019
(51) Int. Cl.: F04D 29/02, B22F 5/00, F04D 29/28, B22F 3/00, B33Y 10/00

(54) **IMPELLER AND TURBOCOMPRESSOR EQUIPPED WITH SUCH IMPELLER AND METHOD FOR MANUFACTURING SUCH AN IMPELLER**
LAUFRAD UND TURBOVERDICHTER MIT EINEM SOLCHEN LAUFRAD UND VERFAHREN ZUR HERSTELLUNG EINES SOLCHEN LAUFRADES
HÉLICE ET TURBOCOMPRESSEUR ÉQUIPÉ DE CETTE HÉLICE ET PROCÉDÉ DE FABRICATION DE CETTE HÉLICE

(30) Priority: 27.12.2018 BE 201805957; 09.08.2019 BE 201905517
(43) Date of publication of application: 03.11.2021
(73) Proprietor: ATLAS COPCO AIRPOWER, naamloze vennootschap, 2610 Wilrijk (BE)
(72) Inventor: KEMPEN, Karolien, 2610 Wilrijk (BE); DE GERSEM, Hilde, 2610 Wilrijk (BE); DE GREEF, Guy, 2610 Wilrijk (BE)
(74) Representative: Van Minnebruggen, Ewan Benito Agnes
(86) International application number: PCT/IB2019/060167
(87) International publication number: WO 2020/136473

(56) References cited:
- WO-A1-2016/127225
- DE-A1- 102013 221 990
- DE-A1- 102016 217 349
- GB-A- 1 515 296
- GB-A- 2 058 941
- US-A- 4 787 821
- US-A1- 2006 140 767
- US-A1- 2010 098 546
- US-A1- 2015 267 543

## Description

The present invention relates to an impeller, for example an impeller for a centrifugal machine such as a turbocompressor, turbine or the like.

A centrifugal compressor element as used in turbocompressors exists as is known from an impeller that is rotatably mounted in a housing with an axial inlet and a radial outlet, whereby the impeller is formed by a sort of solid trumpet-shaped hub to bend the gas drawn in at the inlet from the axial direction to the radial direction at the outlet and by blades mounted on the hub which together with the hub and the housing define narrowing channels through which the gas is guided to compress it.

The impeller is provided with a central borehole to be able to attach the impeller to a drive shaft.

It is known that such impeller is driven at high speeds of several tens of thousands of revolutions per minute, whereby the linear peripheral velocity at the outlet of the impeller can reach several hundreds of metres per second.

The huge centrifugal forces that occur in such high speeds generate massive stresses in the material of the impeller.

However, these stresses in an impeller with a completely solid hub are distributed very unevenly. The stress field on the impeller is a combination of stresses in different directions, which are typically multi-axially oriented, i.e. according to different axes. At the level of the back of the hub, i.e. at the end of the hub with the largest diameter, the stresses are mainly in the radial direction and in the circumferential direction. These two stress components are a result of the centrifugal forces.

The axial stresses on the back of the hub are a second-order effect. The axial stresses are important for the central borehole, because the impeller is tensioned in axial direction on a shaft using a tensile bolt.

Depending on the geometry of the impeller, the stress gradient may vary, but the largest section of the impeller is underloaded by stresses that are far below the elastic limit of the material from which the impeller is made, the disadvantage being an inefficient use of this material and an unnecessary high mass of the impeller.

Nevertheless, the reduction of the mass of the impeller is important to keep the natural bending frequency of the drive shaft on which the impeller is mounted sufficiently high to enable higher speeds of the impeller, which is in itself useful for the energy-efficient operation of a turbocompressor.

Also, by reducing the mass of the impeller the high stresses as a result of the centrifugal forces, both on the central borehole, on the back of the hub and on the rounding at the level of the back-hub transition, will be limited.

With a lower mass of the impeller the bearings of the drive shaft are less loaded, such that by design smaller bearings can be selected in turbo compressors resulting in a lower cost price and/or a more compact compressor element, or a drive shaft of a smaller diameter.

Solutions to reduce the mass of the impeller are already known, for example by applying a metal grid structure in a central section of the hub as disclosed in WO 2013/12431.4, but this is less able to absorb the radially oriented centrifugal forces, such that the grid structure is unnecessarily strong and rigid in unloaded directions, resulting in a certain weight disadvantage.

Another solution is to provide a hollow hub with internal reinforcements as disclosed in US 7.281.901.

They are aimed mainly at reducing the inertia and are unsuitable to uniformly distribute the stresses in the impeller, which will result in the occurrence of stress concentrations.

WO 2016/127225 discloses an internal structure of the impeller, consisting of a hollow hub with reinforcing ribs which are specifically aimed at absorbing the radial centrifugal forces, such that the stresses that are generated can flow into the hub.

The reinforcing ribs extend from the hub, on the level of the base of the blades, to the shaft or tube and form radial spokes, so to speak. The reinforcing ribs hereby follow the curve of the blades and are thus themselves also curved, both in height and in length in order to be able to thus absorb centrifugal forces.

Although such impeller is better at absorbing the centrifugal forces, it remains necessary to make the hub and/or reinforcing ribs thicker in certain places to be able to absorb the stresses.

Due to the design of such impeller it needs to be manufactured by means of an additive production method.

Preferably, powder bed fusion is used for this, whereby thermal energy is utilised to selectively enable certain regions in a powder bed to fuse together, which will allow all the details to be 'printed' with the necessary precision.

A property of such additive production method is that the surface roughness of the produced structure will depend on the slope of the structure in question: the straighter the structure the flatter or smoother the surface.

In the impeller of WO 2016/127225 the reinforcing ribs comprise sloping structures, such that they are relatively rough. This has very adverse effects for the fatigue.

Moreover, the curved reinforcing ribs will define cavities with a relatively complex form in the hollow hub, such that it is difficult to remove the remaining unfused powder from these cavities.

Consequently, two passages or holes must be provided per chamber to be able to blow out and remove the powder via these holes.

These holes are of course detrimental for the strength or rigidity of the impeller, as well as for the fatigue.

Therefore, there is still a need of an impeller structure with a better utilisation of the material and a smaller mass, in which the centrifugal forces and the axial tensioning forces are optimally absorbed and which can be made easily and precisely via an additive production method.

The purpose of the present invention is to provide a solution for one or more of the aforementioned and other disadvantages relating to known designs of an impeller as disclosed in the aforementioned WO 2013/124314, the US 7.281.901, the US2006/140767 and the WO 2016/127225.

To this end, the invention relates to an impeller according to claim 1.

The 'essentially radial direction' in which the reinforcing ribs extend means that the angle between the radial reinforcing ribs and the geometric centreline of the central shaft or tube of the impeller is maximum 10 degrees, and better still maximum 7 degrees and preferably maximum 5 degrees.

This provides the advantage that such impeller, as is the case in WO 2016/127225, will be very light due to its hollow structure such that the impeller will be able to rotate at a very high speed. In this way the turbocompressor in which the impeller is provided will be able to supply more compressed air.

Another advantage is that due to the orientation of the reinforcing ribs the internal structure is much more rigid, such that centrifugal forces will be absorbed better by the straight reinforcing ribs than in WO 2016/127225 with the curved reinforcing ribs. The consequence or advantage of this is that the hub or the reinforcing ribs do not have to be made thicker in certain locations to absorb the stresses occurring there.

Moreover, the reinforcing ribs will also extend axially in a straight or flat direction, such that the impeller is also better at absorbing forces in the axial direction. Indeed, due to the tensioning with a tension bolt in an axial direction, the impeller is compressed when being mounted in a turbomachine. Due to the internal structure with the flat, straight reinforcing ribs, this print is absorbed better, such that less stresses are created in the impeller.

Yet another advantage is that in the manufacture only upstanding structures need to be printed for the reinforcing ribs. Consequently, the surface will be smoother, such that less fatigue will occur.

An added advantage is that the chambers that are created by the reinforcing ribs have a simpler shape, such that the removal of the powder from these chambers after printing will be easier. Only one hole will have to be provided to remove the powder.

Preferably, the number of reinforcing ribs is in proportion to the number of blades.

This will make sure the impeller is cyclical-symmetric, which means it will comprise a number of sections which repeat themselves.

In this way the weight will also be distributed in a cyclical-symmetric way, which is necessary for the balancing of the impeller.

According to the invention, the impeller is provided with at least one polygon or ring connecting all reinforcing ribs with each other and which is concentric with the central shaft or tube.

Due to this polygon or ring the space between two consecutive radial reinforcing ribs is divided into two so-called chambers.

The polygon or ring will make the impeller mechanically stronger and more resistant to deformation.

It is known that for an impeller the deformation must be limited, i.e. typically less than a few tenths of a millimetre.

According to a preferred characteristic of the invention the attachments between the reinforcing ribs and possibly the at least one polygon or ring with the rest of the impeller are rounded.

By rounding all internal edges, sides and corners which are created, among others, by the reinforcing ribs and the polygon or ring, fatigue will be reduced to a minimum.

The invention also relates to a turbocompressor, characterised in that it is provided with an impeller according to the invention.

The advantages of such turbocompressor are directly related to the advantages of the impeller according to the invention.

Thus, the turbocompressor will be able to rotate at a higher speed compared to a turbocompressor with a known, traditional solid impeller, such that more compressed air can be supplied.

The invention also relates to a method for manufacturing an impeller according to claim 8.

In particular the invention relates to a method whereby said steps are executed by means of an additive production method.

With the intention of better showing the characteristics of the invention, a few preferred embodiments of an impeller according to the invention and a turbocompressor equipped with it are described by way of an example without any limiting nature, with reference to the accompanying drawings, wherein:
figure 1 schematically shows a perspective view of an impeller according to the invention;
figure 2 shows a cross-section according to the plane II-II in figure 1;
figure 3 shows a cross-section according to the plane III-III in figure 1;
figure 4 shows the view according to the arrow F4 from figure 1.

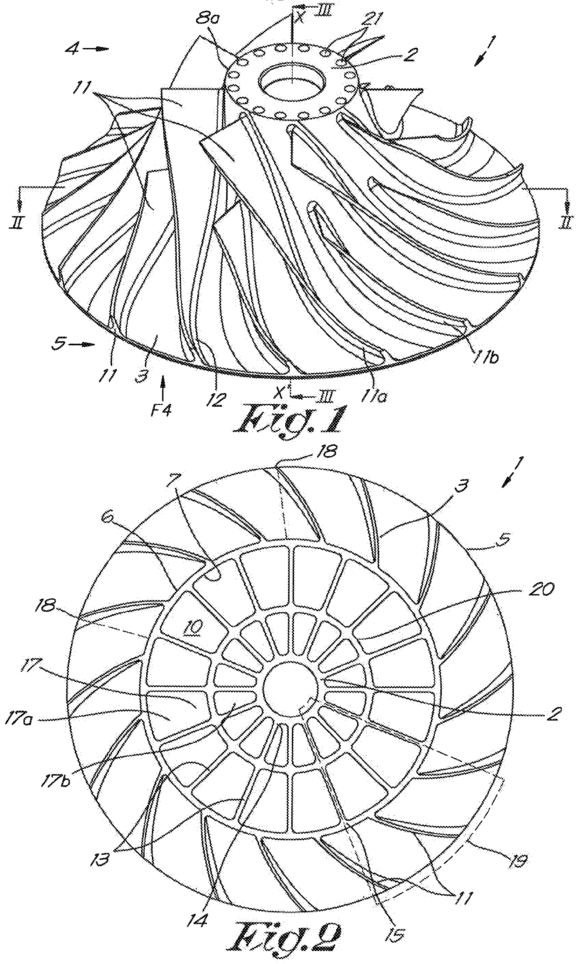

The impeller 1. shown in the figures 1 to 4 is an impeller of a turbocompressor by way of example.

The impeller 1 according to the invention, as shown in figure 1, is very similar in terms of external design to a traditionally known impeller.

The impeller 1 contains a central tube 2 with which the impeller 1 can be mounted on a drive shaft (not shown in the figures) in order to be driven around the geometric centreline X-X' of the tube 2 in the housing of, for example, a compressor element.

Instead of a central tube 2, the impeller 1 can also be provided with a solid shaft which can be coupled to said drive shaft.

The impeller 1 further comprises a trumpet-shaped hub 3 extending around the tube 2, which in the direction from one end 4 to the other end 5 increases in diameter.

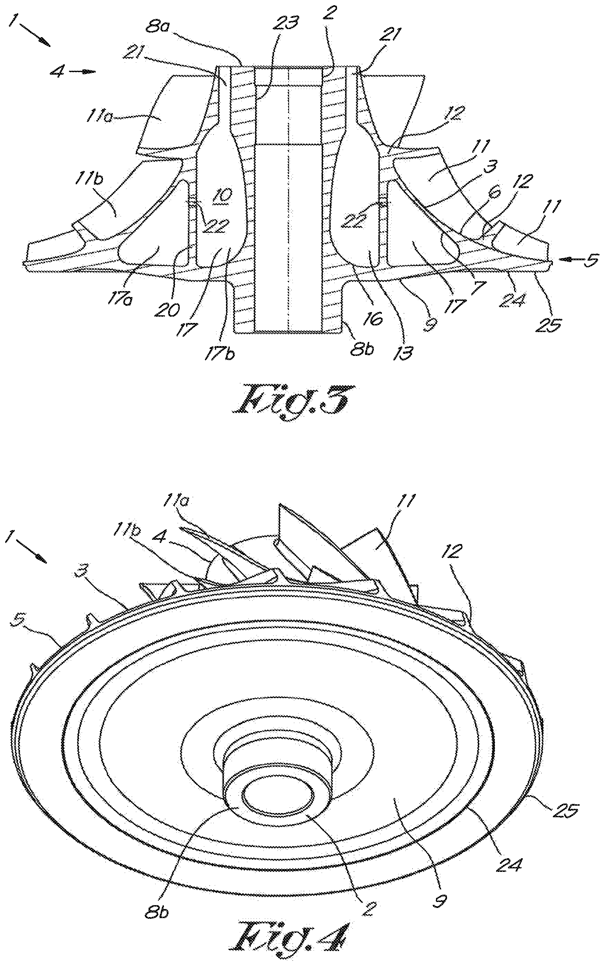

According to the invention the hub 3 is a hollow hub 3 with an outside 6 and an inside 7 oriented toward the tube 2. This is visible in figures 2 and 3.

The hub 3 connects to on one end 8a of the central tube 2 with the end 4 with the smallest diameter. This end 4 is also called the axial end of the hub 3.

The hub 3 connects to a back wall 9 with the end 5 with the largest diameter, which is visible in figures 3 and 4. This end 5 is also called the radial end of the hub 3.

This essentially disk-shaped back wall 9, on the level of the other end 8b of the central tube 2, extends perpendicularly to the tube 2 and will close or enclose the hollow space 10 between the hub 3, the tube 2 and the back wall 9.

The outside 6 or the outer surface of the hub 3 changes in a sloping way from an essentially axial direction X-X' at the end 4 with the smallest diameter to an essentially radial direction at the end 5 with the largest diameter. This slope is visible in figure 3.

On the hub 3 a series of curved blades 11 is attached, which are affixed with their base 12 on said outside 6 of the hub 3.

In the example shown, two series of blades are provided, i.e. main blades 11a, on the one hand, which extend over a certain length from the axially oriented end 4 of the hub 3 to the radially oriented end 5 of the hub 3, and splitter blades 11b on the other hand, which extend between the main blades 11a over a shorter length, starting at an axial distance from the end 4 of the hub 3 to the end 5 of the hub 3.

However, the invention is not limited to two series of blades 11, but is also applicable to any number of series of blades 11, whereby for example no splitter blades 11b are present or on the contrary a number of series of splitter blades 11b can be provided.

According to the invention, in the hollow space 10 of the hub 3, flat, straight reinforcing ribs 13 are provided, which extend on the tube 2 in radial direction and form a radial connection between the tube 2 and the inside 7 of the hub 3.

The reinforcing ribs 13 are connected with their base 14 to the tube 2 and with their head 15 to the inside 7 of the hub 3.

In this case, the reinforcing ribs 13 extend from the back wall 9 to the end 4 of the hub 3 with the smallest diameter, as shown in figure 3. In other words, the reinforcing ribs 13 are connected directly to the back wall 9 along an edge 16 over their height.

The reinforcing ribs 13 will divide the hollow space 10 into a number of chambers 17.

In this case the geometric plane of the reinforcing ribs 13 will intersect with the tip 18 of the blades 11 on the end 5 of the hub 3 with the largest diameter.

The geometric plane also refers to the geometric or imaginary extension of the reinforcing ribs 13.

In this way the reinforcing ribs 13 are located in the direction of the largest centrifugal force, such that they can absorb the centrifugal force optimally.

Moreover, the geometric centreline X-X' of the central tube 2 coincides with the geometric plane of the reinforcing ribs 13. This means that the angle between the reinforcing ribs 13 and the geometric centreline X-X' of the central shaft 2 is zero degrees. This is not necessary for the invention, but this angle is maximum ten degrees according to the invention and preferably maximum seven degrees and even more preferable maximum five degrees.

The number of reinforcing ribs 13 is not restrictive for the invention and will depend, among others, on the dimensions of the impeller 1. Typically, a larger impeller 1 will require more reinforcing ribs 13, as it will be subject to greater centrifugal forces due to its dimensions.

However, preferably the number of reinforcing ribs 13 is always in proportion to the number of blades 11.

This means, when there are eight main blades 11a and eight splitter blades 11b, for example, there are sixteen reinforcing ribs 13. This is also the case in the example shown.

For example, it is also possible that thirty-two reinforcing ribs 13 are provided. Moreover, it is also not excluded that the number of reinforcing ribs 13 is in proportion to the number of main blades 11a, such that it is also possible only eight reinforcing ribs 13 are provided.

The foregoing will ensure that a cyclical-symmetrical structure is obtained, whereby the impeller 1 comprises a number of sections 19, in the example of the figures eight sections, which are repeated every time.

The reinforcing ribs 13 are primarily under a tensile load, whereby the entire mass of the reinforcing ribs 13 is used to divert a part of the stresses from the hub 3 to the tube 2 and also to the back wall 9 if necessary, and there is thus no, or practically no, dead mass, in other words unloaded mass, in the hollow space 10 of the hub 3 which does not contribute to the strength of the impeller 1 in the radial direction.

According to the invention, the impeller 1. is provided with one ring 2C connecting all reinforcing ribs 13 with each other.

It could also be more than one ring 20.

Moreover, instead of a. ring 20 one or several polygons or a combination of polygon and circle 20 could be applied.

In order to preserve the cyclical symmetry, said ring 20 is concentric with the central tube 2.

The ring 20 will subdivide each chamber 17 into two subchambers 17a, 17b.

The ring 20 will provide sturdiness or mechanical strength and counter deformation.

It is indeed important that the impeller 1 does not deform too much. Indeed, the inward deformation may not be too big, in order to counter air and air pressure losses. The outward deformation is also crucial, as there is a housing around the impeller 1, whereby the rotating impeller 1 must never touch this housing and other stationary components of the compressor element.

As shown in the figures, the attachments between the reinforcing ribs 13 and the at least one concentric polygon or ring 20 with the rest of the impeller 1 are rounded.

This means that all internal edges, sides and corners are rounded. This is important to avoid stress concentrations.

This will also be necessary when the impeller 1 is manufactured by means of an additive production method.

Additive production refers to a category of production methods, for example powder bed fusion whereby thermal energy is utilised to selectively fuse together certain regions in a powder bed, or direct energy deposition whereby beamed thermal energy is used to melt materials while they are deposited.

Within the category of powder bed fusion, there are a number of technologies such as electron beam melting, whereby powder material is melted using an electron beam; selective laser melting whereby powder material is melted by means of a laser; selective laser sintering whereby powder material is sintered using a laser. The category of direct energy deposition includes the technology of laser cladding.

In such production methods based on powder bed fusion it is important there are no structures with too big a slope, such that in some cases, corners must be rounded in order to avoid such slopes.

Another consequence of such production method is that the hollow internal space and (sub) chambers 17, 17a, 17b must be connected with the environment, in order to be able to remove the remaining powder.

In this case, powder will remain in the chambers 17 and subchambers 17a, 17b during the manufacture of the impeller 1 by means of powder bed fusion.

That is why in the example shown the central tube 2 is provided with holes 21 which extend in the axial direction and which form a connection between the hollow space 10 of the hub 3 and the environment.

Said ring 20 is also provided with passages 22, whereby at least one passage 22 is always provided in the section of the ring 20 located between two reinforcing ribs 13.

These holes 21 and passages 22 are already provided during the production process.

Via said holes 21 and passages 22 the powder will be able to leave the (sub)chambers.

Due to the straight and flat form of the reinforcing ribs 13 and the straight form of the ring 20 the powder can be simply removed by shaking the impeller 1.

After the impeller 1 has been manufactured and the remaining powder is removed, every impeller 1 is balanced. This means that the impeller 1 is measured or weighed and that material is removed or added in certain locations until the impeller 1 is balanced, this means: the weight is distributed (cyclically-) symmetrically. This is very important for the functioning of the impeller 1, as the smallest imbalance can result in adverse effects due to unwanted stresses and vibrations.

When cyclical-symmetric is referred to in this context, it must be noted that perfect cyclical-symmetry is very difficult to achieve in practice. That is why in the current text this needs to be interpreted as "practically cyclical-symmetric", which in this context corresponds with a maximum distance between the geometric centreline of the central shaft on the one hand and the intersection of the reinforcing ribs with the back wall on the other hand, which is 10% of the height of the impeller.

To allow the impeller 1 to approximate cyclical-symmetry as much as is practically realisable, additional material can be provided in a number of locations in the impeller 1, which can be used later to balance the impeller 1 by removing material locally.

As shown in figures 3 and 4, the impeller 1 shows a local thickening 23 of the central tube 2 on the level of the end 8a of the tube 2.

This local thickening 23 can be executed as a solid ring at the end 8a of the tube 2, whereby material can be removed from this ring, for example by drilling holes.

The impeller 1 shows a local thickening 24 of the back wall 9 on the level of the outer edge 25.

In other words, this thickening 24 is located at the location where the end 4 of the hub 3 with the largest diameter makes contact with the back wall 9.

Material can also be removed at this location for balancing, for example by milling or grinding.

As already mentioned, instead of on a tube 2 this can also be applied on a solid haft, in which holes 21 may or may not be provided to remove powder from the space.

The present invention is by no means limited to the embodiments described as an example and shown in the drawings, but an impeller according to the invention and a turbocompressor equipped therewith can be realised in all kinds of forms and dimensions, without departing from the scope of the invention, which is defined by the appended claims.

## Claims

1. Impeller containing:
- a central shaft or a tube (2) for mounting on a shaft;
- around the shaft or tube (2) a hollow hub (3) which in the direction from one end (4) to the other end (5) increases in diameter, said hub (3) possessing an outside (6) and an inside (7) oriented towards the shaft or tube (2);
- a back wall (9) which is provided at the end (5) of the hub (3) with the largest diameter perpendicular to the shaft or tube (2) which at least partially closes the hollow space (10) of the hub (3);
- a series of blades (11) that are attached to the outside (6) of the hub (3) by their base (12);
wherein a number of flat, straight reinforcing ribs (13) are provided which extend on the shaft or tube (2) in an essentially radial direction and form a radial connection between the shaft or tube (2) and the inside (7) of the hub (3), and wherein the reinforcing ribs (13) further extend axially in a straight or flat direction, wherein the impeller (1) is provided with at least one polygon or ring (20) connecting all reinforcing ribs (13) with each other and which is concentric with the central shaft or tube (2), **characterised in that** said ring (20) or polygon is provided with passages (22), whereby at least one passage (22) is always provided in the section of the ring (20) or polygon located between two reinforcing ribs (13).

2. Impeller according to claim 1, **characterised in that** the geometric plane of the reinforcing ribs (13) intersects with the tip (18) of the blades (11) at the end (5) of the hub (3) with the largest diameter.

3. Impeller according to claim 1 or 2, **characterised in that** the geometric centreline of the central shaft or tube (2) coincides with the plane of the reinforcing ribs (13).

4. Impeller according to any one of the previous claims, **characterised in that** the tube or central shaft (2) is provided with holes (21) which extend in the axial direction and which form a connection between the hollow space (10) of the hub (3) and the environment.

5. Impeller according to any one of the previous claims, **characterised in that** the impeller (1) shows a local thickening (23) of the central shaft or tube (2) on the level of the end (8a) of the tube (2) located at the end (4) of the hub (3) with the smallest diameter.

6. Impeller according to any one of the previous claims, **characterised in that** the impeller (1) shows a local thickening (24) of the back wall (9) on the level of the outer edge (25).

7. Turbocompressor, **characterised in that** it is provided with an impeller (1) according to any one of the previous claims.

8. Method for manufacturing an impeller, said method comprising the following steps:
- providing a central shaft or a tube (2) for mounting on a shaft;
- providing a hollow hub (3) around the shaft or tube (2) which in the direction from one end (4) to the other end (5) increases in diameter, said hub (3) possessing an outside (6) and an inside (7) oriented towards the shaft or tube (2);
- providing a back wall (9) which is provided at the end (5) of the hub (3) with the largest diameter perpendicular to the shaft or tube (2) which at least partially closes the hollow space (10) of the hub (3);
- providing a series of blades (11) that are attached to the outside (6) of the hub (3) by their base (12),
wherein the method further comprises the step of providing a number of flat, straight reinforcing ribs (13) which extend on the shaft or tube (2) in an essentially radial direction and form a radial connection between the shaft or tube (2) and the inside (7) of the hub (3), and further extend axially in a straight or flat direction, wherein it further comprises the step of providing the impeller (1) with at least one polygon or ring (20) connecting all reinforcing ribs (13) with each other and which is concentric with the central shaft or tube (2), **characterised in that** the method further comprises the step of providing one or more passages (22) during the additive production process, whereby at least one passage (22) is always provided in the section of the polygon or ring (20) located between two reinforcing ribs (13).

9. Method according to claim 8, **characterised in that** said steps are executed by means of an additive production method.

10. Method according to claim 9, **characterised in that** for the additive production method a direct energy deposition method is applied, whereby beamed thermal energy is used to allow materials to melt while they are deposited.

11. Method according to claim 10, **characterised in that** for the direct energy deposition method, laser cladding technology is applied.

12. Method according to any one of the claims 8 to 11, **characterised in that** the method further comprises the step of providing one or more holes (21) in the central tube (2) during the additive production process which form a connection between the hollow space (10) of the hub (3) and the environment.

13. Method according to the claim 12, **characterised in that** after the additive production process the method further comprises the step of shaking the impeller (1) to remove excess powder material from the hollow space (10) of the hub (5) via the aforementioned one or more holes (20) and/or (21).

14. Method according to claim 13, **characterised in that** the method after removing the remaining powder, further comprises the step of balancing the impeller (1) by removing or adding material in certain locations until the impeller 1 is balanced.

15. Method according to claim 14, **characterised in that** it comprises the step of adding additional material during the additive production process for balancing purposes, which after the removal of the excessive powder, can be removed locally to balance the impeller (1).

## Patentansprüche

1. Laufrad, aufweisend:
- eine zentrale Welle oder ein Rohr (2) zur Montage auf einer Welle;
- um die Welle oder das Rohr (2) herum eine hohle Nabe (3), die in der Richtung von einem Ende (4) zu dem anderen Ende (5) im Durchmesser zunimmt, wobei die Nabe (3) eine Außenseite (6) und eine zur Welle oder zum Rohr (2) hin orientierte Innenseite (7) aufweist;
- eine Rückwand (9), die an dem Ende (5) der Nabe (3) mit dem größten Durchmesser senkrecht zu der Welle oder dem Rohr (2) bereitgestellt ist und die den Hohlraum (10) der Nabe (3) zumindest teilweise verschließt;
- eine Reihe von Schaufeln (11), die mit ihrer Basis (12) an der Außenseite (6) der Nabe (3) befestigt sind;
wobei eine Anzahl von flachen, geraden Verstärkungsrippen (13) bereitgestellt ist, die sich auf der Welle oder dem Rohr (2) in einer im Wesentlichen radialen Richtung erstrecken und eine radiale Verbindung zwischen der Welle oder dem Rohr (2) und der Innenseite (7) der Nabe (3) bilden, und wobei sich die Verstärkungsrippen (13) weiter axial in einer geraden oder flachen Richtung erstrecken, wobei das Laufrad (1) mit zumindest einem Polygon oder Ring (20) versehen ist, der alle Verstärkungsrippen (13) miteinander verbindet und der konzentrisch zu der zentralen Welle oder dem zentralen Rohr (2) ist, **dadurch gekennzeichnet, dass** der Ring (20) oder das Polygon mit Durchgängen (22) bereitgestellt ist, wobei zumindest ein Durchgang (22) immer in dem Abschnitt des Rings (20) oder Polygons bereitgestellt ist, der sich zwischen zwei Verstärkungsrippen (13) befindet.

2. Laufrad nach Anspruch 1, **dadurch gekennzeichnet, dass** sich die geometrische Ebene der Verstärkungsrippen (13) mit der Spitze (18) der Schaufeln (11) an dem Ende (5) der Nabe (3) mit dem größten Durchmesser schneidet.

3. Laufrad nach Anspruch 1 oder 2, **dadurch gekennzeichnet, dass** die geometrische Mittellinie der zentralen Welle oder des zentralen Rohrs (2) mit der Ebene der Verstärkungsrippen (13) zusammenfällt.

4. Laufrad nach einem der vorstehenden Ansprüche, **dadurch gekennzeichnet, dass** das Rohr oder die zentrale Welle (2) mit Löchern (21) bereitgestellt ist, die sich in der axialen Richtung erstrecken und die eine Verbindung zwischen dem Hohlraum (10) der Nabe (3) und der Umgebung bilden.

5. Laufrad nach einem der vorstehenden Ansprüche, **dadurch gekennzeichnet, dass** das Laufrad (1) eine lokale Verdickung (23) der zentralen Welle oder des Rohrs (2) auf der Höhe des Endes (8a) des Rohrs (2) aufweist, das sich an dem Ende (4) der Nabe (3) mit dem kleinsten Durchmesser befindet.

6. Laufrad nach einem der vorstehenden Ansprüche, **dadurch gekennzeichnet, dass** das Laufrad (1) eine lokale Verdickung (24) der Rückwand (9) auf der Höhe des Außenrandes (25) aufweist.

7. Turboverdichter, **dadurch gekennzeichnet, dass** er mit einem Laufrad (1) nach einem der vorstehenden Ansprüche bereitgestellt ist.

8. Verfahren zur Herstellung eines Laufrads, wobei das Verfahren die folgenden Schritte umfasst:
- Bereitstellen einer zentralen Welle oder eines Rohrs (2) zur Montage auf einer Welle;
- Bereitstellen einer hohlen Nabe (3) um die Welle oder das Rohr (2) herum, die in der Richtung von einem Ende (4) zu dem anderen Ende (5) im Durchmesser zunimmt, wobei die Nabe (3) eine Außenseite (6) und eine Innenseite (7) aufweist, die zur Welle oder zum Rohr (2) hin orientiert ist;
- Bereitstellen einer Rückwand (9), die an dem Ende (5) der Nabe (3) mit dem größten Durchmesser senkrecht zu der Welle oder dem Rohr (2) bereitgestellt ist und die den Hohlraum (10) der Nabe (3) zumindest teilweise verschließt;
- Bereitstellen einer Reihe von Schaufeln (11), die mit ihrer Basis (12) an der Außenseite (6) der Nabe (3) befestigt sind,
wobei das Verfahren weiter den Schritt des Bereitstellens einer Anzahl von flachen, geraden Verstärkungsrippen (13) umfasst, die sich auf der Welle oder dem Rohr (2) in einer im Wesentlichen radialen Richtung erstrecken und eine radiale Verbindung zwischen der Welle oder dem Rohr (2) und der Innenseite (7) der Nabe (3) bilden und sich weiter axial in einer geraden oder flachen Richtung erstrecken, wobei es weiter den Schritt des Bereitstellens des Laufrads (1) mit zumindest einem Polygon oder Ring (20) umfasst, der alle Verstärkungsrippen (13) miteinander verbindet und der konzentrisch zu der zentralen Welle oder dem Rohr (2) ist, **dadurch gekennzeichnet, dass** das Verfahren weiter den Schritt des Bereitstellens eines oder mehrerer Durchgänge (22) während des additiven Herstellungsprozesses umfasst, wobei zumindest ein Durchgang (22) immer in dem Abschnitt des Polygons oder Rings (20) bereitgestellt ist, der sich zwischen zwei Verstärkungsrippen (13) befindet.

9. Verfahren nach Anspruch 8, **dadurch gekennzeichnet, dass** die Schritte mittels eines additiven Herstellungsverfahrens ausgeführt werden.

10. Verfahren nach Anspruch 9, **dadurch gekennzeichnet, dass** für das additive Herstellungsverfahren ein Verfahren zur direkten Energieabscheidung angewandt wird, bei dem gestrahlte Wärmeenergie verwendet wird, um Materialien während ihrer Abscheidung schmelzen zu lassen.

11. Verfahren nach Anspruch 10, **dadurch gekennzeichnet, dass** für das Verfahren der direkten Energieabscheidung die Technologie des Laserauftragschweißens angewandt wird.

12. Verfahren nach einem der Ansprüche 8 bis 11, **dadurch gekennzeichnet, dass** das Verfahren weiter den Schritt des Bereitstellens eines oder mehrerer Löcher (21) in dem zentralen Rohr (2) während des additiven Herstellungsprozesses umfasst, die eine Verbindung zwischen dem Hohlraum (10) der Nabe (3) und der Umgebung bilden.

13. Verfahren nach Anspruch 12, **dadurch gekennzeichnet, dass** das Verfahren nach dem additiven Herstellungsprozess weiter den Schritt des Schüttelns des Laufrads (1) umfasst, um überschüssiges Pulvermaterial aus dem Hohlraum (10) der Nabe (5) über die vorgenannten ein oder mehreren Löcher (20) und/oder (21) zu entfernen.

14. Verfahren nach Anspruch 13, **dadurch gekennzeichnet, dass** das Verfahren nach dem Entfernen des restlichen Pulvers weiter den Schritt des Auswuchtens des Laufrads (1) durch Entfernen oder Hinzufügen von Material an bestimmten Stellen umfasst, bis das Laufrad 1 ausgewuchtet ist.

15. Verfahren nach Anspruch 14, **dadurch gekennzeichnet, dass** es den Schritt der Zugabe von zusätzlichem Material während des additiven Herstellungsprozesses zu Auswuchtungszwecken umfasst, das nach der Entfernung des überschüssigen Pulvers lokal entfernt werden kann, um das Laufrad (1) auszuwuchten.

## Revendications

1. Roue qui contient :
- un arbre central ou un tube (2) destiné à être monté sur un arbre ;
- autour de l'arbre ou du tube (2), un moyeu creux (3) dont le diamètre augmente dans la direction allant d'une extrémité (4) à l'autre extrémité (5), ledit moyeu (3) possédant un côté externe (6) et un côté interne (7) orienté dans la direction de l'arbre ou du tube (2) ;
- une paroi arrière (9) qui est prévue à l'extrémité (5) du moyeu (3), dont le diamètre maximal est perpendiculaire à l'arbre ou au tube (2), qui ferme au moins de manière partielle l'espace creux (10) du moyeu (3) ;
- une série d'aubes (11) qui sont fixées sur le côté externe (6) du moyeu (3) par l'intermédiaire de leur base (12) ;
dans laquelle on procure un certain nombre de nervures de renforcement plates, rectilignes (13) qui s'étendent sur l'arbre ou le tube (2) dans une direction essentiellement radiale et qui forment une liaison radiale entre l'arbre ou le tube (2) et le côté interne (7) du moyeu (3); et dans laquelle les nervures de renforcement (13) s'étendent en outre en direction axiale dans une direction rectiligne ou à plat; dans laquelle la roue (1) est pourvue d'au moins un polygone ou un anneau (20) qui relie toutes les nervures de renforcement (13) les unes avec les autres et qui est concentrique avec l'arbre central ou le tube (2), **caractérisée en ce que** ledit anneau (20) ou ledit polygone est muni de passages (22) ; dans laquelle au moins un passage (22) est toujours prévu dans le tronçon de l'anneau (20) ou du polygone, qui est situé entre deux nervures de renforcement (13).

2. Roue selon la revendication 1, **caractérisée en ce que** le plan géométrique des nervures de renforcement (13) coupe le bout (18) des aubes (11) à l'extrémité (5) du moyeu (3) présentant le plus grand diamètre.

3. Roue selon la revendication 1 ou 2, **caractérisée en ce que** la ligne médiane géométrique de l'arbre central ou du tube (2) coïncide avec le plan des nervures de renforcement (13).

4. Roue selon l'une quelconque des revendications précédentes, **caractérisée en ce que** le tube ou l'arbre central (2) est muni de trous (21) qui s'étendent dans la direction axiale et qui forment une liaison entre l'espace creux (10) du moyeu (3) et l'environnement.

5. Roue selon l'une quelconque des revendications précédentes, **caractérisée en ce que** la roue (1) présente un épaississement local (23) de l'arbre central ou du tube (2) au niveau de l'extrémité (8a) du tube (2), située à l'extrémité (4) du moyeu présentant le plus petit diamètre.

6. Roue selon l'une quelconque des revendications précédentes, **caractérisée en ce que** la roue (1) présente un épaississement local (24) de la paroi arrière (9) au niveau du bord externe (25).

7. Turbocompresseur, **caractérisé en ce qu'**il est équipé d'une roue (1) selon l'une quelconque des revendications précédentes.

8. Procédé destiné à la fabrication d'une roue, ledit procédé comprenant les étapes suivantes dans lesquelles :
- on procure un arbre central ou un tube (2) destiné à être monté sur un arbre ;
- on procure autour de l'arbre ou du tube (2), un moyeu creux (3) dont le diamètre augmente dans la direction allant d'une extrémité (4) à l'autre extrémité (5), ledit moyeu (3) possédant un côté externe (6) et un côté interne (7) orienté dans la direction de l'arbre ou du tube (2) ;
- on procure une paroi arrière (9) qui est prévue à l'extrémité (5) du moyeu (3), dont le diamètre maximal est perpendiculaire à l'arbre ou au tube (2), qui ferme au moins de manière partielle l'espace creux (10) du moyeu (3);
- on procure une série d'aubes (11) qui sont fixées sur le côté externe (6) du moyeu (3) par l'intermédiaire de leur base (12) ;
dans lequel le procédé comprend en outre l'étape dans laquelle on procure un certain nombre de nervures de renforcement plates, rectilignes (13) qui s'étendent sur l'arbre ou le tube (2) dans une direction essentiellement radiale et qui forment une liaison radiale entre l'arbre ou le tube (2) et le côté interne (7) du moyeu (3) ; et qui s'étendent en outre en direction axiale dans une direction rectiligne ou à plat ; et dans lequel il comprend en outre l'étape dans laquelle on munit la roue (1) d'au moins un polygone ou un anneau (20) qui relie toutes les nervures de renforcement (13) les unes avec les autres et qui est concentrique avec l'arbre ou le tube (2), **caractérisé en ce que** le procédé comprend en outre l'étape dans laquelle on procure un ou plusieurs passages (22) au cours du processus de fabrication additive ; dans lequel au moins un passage (22) est toujours prévu dans le tronçon du polygone ou de l'anneau (20) ou, qui est situé entre deux nervures de renforcement (13).

9. Procédé selon la revendication 8, **caractérisé en ce que** lesdites étapes sont mises en oeuvre au moyen d'un processus de fabrication additive.

10. Procédé selon la revendication 9, **caractérisé en ce que**, pour le processus de fabrication additive, on applique un procédé de dépôt direct d'énergie ; dans lequel on utilise de l'énergie thermique par rayonnement afin de permettre la mise en fusion des matières au fur et à mesure de leur dépôt.

11. Procédé selon la revendication 10, **caractérisé en ce que**, pour le procédé de dépôt direct d'énergie, on applique une technologie de placage au laser.

12. Procédé selon l'une quelconque des revendications 8 à 11, **caractérisé en ce que** le procédé comprend en outre l'étape dans laquelle on procure un ou plusieurs trous (21) dans le tube central (2) au cours du processus de fabrication additive, qui forment une liaison entre l'espace creux (10) du moyeu (3) et l'environnement.

13. Procédé selon la revendication 12, **caractérisé en ce que**, après le processus de fabrication additive, le procédé comprend en outre l'étape dans laquelle on agite la roue (1) afin d'éliminer la matière pulvérulente en excès à partir de l'espace creux (10) du moyeu (3) en passant par les uns ou plusieurs trous (20) et/ou (21) qui ont été mentionnés ci-dessus.

14. Procédé selon la revendication 13, **caractérisé en ce que** le procédé, après l'élimination de la poudre résiduelle, comprend en outre l'étape dans laquelle on équilibre la roue (1) par le fait de retirer ou d'ajouter de la matière à certains endroits jusqu'à ce qu'on l'on obtienne une roue (1) équilibrée.

15. Procédé selon la revendication 14, **caractérisé en ce qu'**il comprend l'étape dans laquelle on ajoute une quantité de matière supplémentaire au cours du processus de fabrication additive à des fins d'équilibrage, quantité qui, après l'élimination de la poudre en excès, peut faire l'objet d'une élimination locale afin d'équilibrer la roue (1).
